# EUROPEAN PATENT APPLICATION

(11) **EP 4 152 543 A1**
(43) Date of publication of application: **22.03.2023**
(21) Application number: 22195875.4
(22) Date of filing: 15.09.2022
(51) Int. Cl.: H02H 7/122, H02J 1/00, H02H 3/02

(54) **A POWER SOURCE PROTECTION DEVICE**

(30) Priority: 17.09.2021 US 202163245338 P
(71) Applicant: Solaredge Technologies Ltd., Herzeliya 4673335 (IL)
(72) Inventor: GLOVINSKY, Tzachi, 4673335 Herzeliya (IL); RABINER, Yacov, 4673335 Herzeliya (IL); LILINTAL, Yosef, 4673335 Herzeliya (IL)
(74) Representative: V.O.

(57) **Abstract**

A protection device is disclosed which may comprise a first sensor, a switch or a controller. The first sensor may be coupled to a first busbar of busbars and may be configured to measure a respective first electrical characteristic of the first busbar. The switch may be connected between the first busbar and a reference terminal. The switch may be configured to connect or disconnect the first busbar to and from the reference terminal. The controller may be coupled to the first sensor and to the switch and may be configured to control the switch to connect the first busbar to the reference terminal (e.g., based on the measurement of the first electrical characteristic indicating a change in the first electrical characteristic).

## Description

### BACKGROUND OF THE DISCLOSURE

A power inverter is an electronic device that converts direct current (DC) electric power to alternating current (AC) electric power. Power inverters may employ moving parts, or may be static (not employing moving parts). The DC electric power may be provided by a DC power source or sources. In some power systems, the DC power source generates a voltage at a first voltage range (e.g., a first voltage classification) and the inverter generates a voltage at a second voltage range (e.g., a second voltage classification), which is higher than the first voltage range. Some inverters, which receive voltage at a first voltage range, and generate a voltage at a second voltage range, may comprise galvanic isolation (e.g., in the form of a transformer).

### BRIEF SUMMARY OF THE DISCLOSURE

The following presents a simplified summary of the disclosure in order to provide a basic understanding of some aspects of the disclosure. This summary is not an extensive overview of the disclosure. It is not intended to identify key or critical elements of the disclosure or to delineate the scope of the disclosure. The following summary merely presents some concepts of the disclosure in a simplified form as a prelude to the more detailed description provided below.

A power system may comprise a protection device. The protection device may comprise a first sensor, a first switch, or a controller. The first sensor may be coupled to a first busbar or busbars. The first sensor may be configured to measure a respective first electrical characteristic of the first busbar. The first switch may be connected between the first busbar, and a reference terminal. The first switch may be configured to connect or disconnect the first busbar to or from the reference terminal. The controller may be coupled to the first sensor or to the first switch. The controller may be configured to control the first switch to connect the first busbar to the reference terminal (e.g., based on the measurement of the first electrical characteristic indicating a change in the first electrical characteristic).

The power system may comprise a power generation assembly, an inverter or an inverter assembly, or a protection device. The power generation assembly may be configured to at least generate a voltage between busbars. The level of the voltage generated by the power generation assembly may be at a first voltage range. A first side terminals at a first side of the inverter assembly may be coupled to the busbars. The inverter assembly may be configured to generate an alternating current (AC) voltage between second side terminals of the inverter assembly. The level of the AC voltage may be at a second voltage range higher than the first voltage range. The protection device may comprise a first sensor, a first switch, or a controller. The first sensor may be coupled to a first busbar of busbars. The first sensor may be configured to measure a respective first electrical characteristic of the first busbar. The first switch may be connected between the first busbar and a reference terminal. The first switch may be configured to connect or disconnect the first busbar to and from the reference terminal. The controller may be coupled to the first sensor or to the first switch. The controller may be configured to control the first switch to connect the first busbar to the reference terminal (e.g., based on the measurement of the first electrical characteristic indicating a change in the first electrical characteristic).

A method of using the power system may comprise measuring a first electrical characteristic relating to a busbar, wherein the busbars may be coupled to a respective side of an inverter assembly. The method may comprise identifying a change in the measured electrical characteristic relating to the busbar. The method may comprise connecting, to a reference terminal, a first busbar coupled to a first side of the inverter assembly (e.g., based at least on the measurement of the first electrical characteristic).

### BRIEF DESCRIPTION OF THE DRAWINGS

A more complete understanding of the present disclosure and the advantages thereof may be acquired by referring to the following description in consideration of the accompanying drawings, in which like reference numbers indicate like features, and wherein:

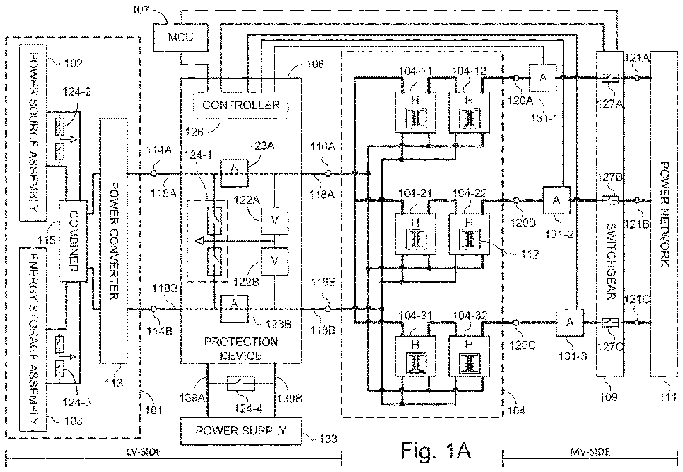

Figures 1A illustrate an example of a power system according to aspects of the disclosure herein;

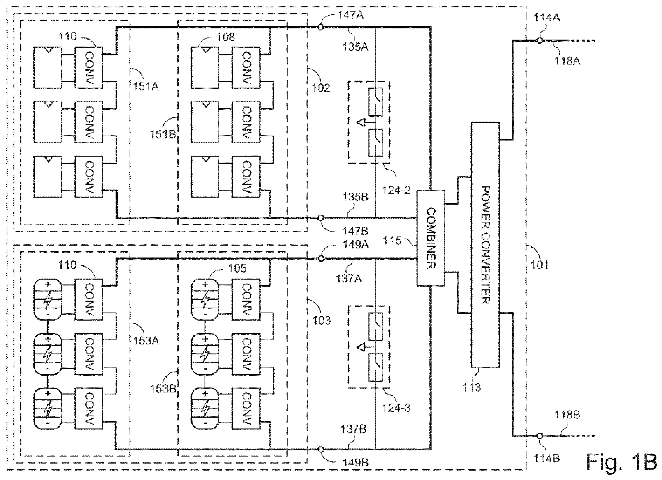

Figure 1B illustrate an example of a power generation assembly according to aspects of the disclosure herein;

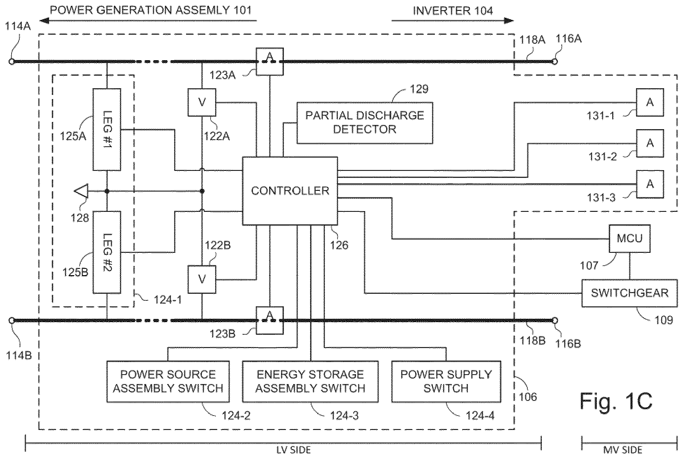

Figure 1C illustrates an example of a protection device according to aspects of the disclosure herein;
Figure ID illustrates an example of a protection device according to aspects of the disclosure herein;
Figures IE illustrates an example implementation of switches according to aspects of the disclosure herein;
Figure IF illustrates an example implementation of switches according to aspects of the disclosure herein;
Figure 1G illustrates an example implementation of switches according to aspects of the disclosure herein;
Figure 1H illustrates an example implementation of switches according to aspects of the disclosure herein;
Figure 2A and Figure 2B illustrate examples of an inverting module according to aspects of the disclosure herein; and
Figure 3 illustrates an example method for protecting from a power generation assembly according to aspects of the disclosure herein.

### DETAILED DESCRIPTION OF THE DISCLOSURE

In the following description of the various embodiments, reference is made to the accompanying drawings, which form a part hereof, and in which is shown by way of illustration various embodiments in which the disclosure herein may be practiced. It is to be understood that other embodiments may be utilized and structural and functional modifications may be made without departing from the scope of the present disclosure. The accompanying show examples of the disclosure. It is to be understood that the examples shown in the drawings and/or discussed herein are non-exclusive and that there are other examples of how the disclosure may be practiced. Herein, the term "terminal", optionally with a preceding adjective or adjectives (e.g., input, output), relates to contact between conductors. Such a contact may be a connector between conductors or a contact point between conductors. Such a contact point between conductors may be, for example, conductors that are soldered, glued, or otherwise coupled together. The term "busbar" relates to an electrical conductor (e.g., rigid, flexible, insulated or non-insulated conductor) configured to delivering electrical power from a power device, to deliver electrical power to a power device, or to alternately deliver electrical power to and from a power device. A power device relates herein to a device employed in a power system. A power device may relate to a power production device such as a power source or a power sink. A power device may also relate to power conversion devices such as an inverter or an inverter assembly, a converter, a combiner, or a rectifier.

The present disclosure relates to a device, a system, or a method for reducing the probability of damage to a power generation assembly of a power system. A power system according to the disclosure may comprise a power generation assembly, an inverter assembly, and a protection device. The power generation assembly may be coupled to the inverter assembly via busbars. The protection device may be coupled to at least one of the nodes of the power system. In some cases, an event of a change in an electrical characteristic (e.g., voltage, current, or power) of a busbar or busbars, may result in damage to the some or all of the various components or devices of the power system, or even to humans. According to the disclosure, in case of an event of change in an electrical characteristic in a busbar or busbars of the power system, the protection device may connect the busbar or busbars to a reference terminal, which may create a path for current to flow from the busbar or busbars, to the reference terminal. In such a case or cases, it may be that the voltage between busbars, or between each busbar and the reference terminal may reduce, which may result in a reduced probability of the above mentioned damage. Thus, a protection device according to the disclosure may reduce the probability of damage in general, and in particular, may reduce the probability of damage either to power devices of a power system, to humans, or to both.

According to some aspects of the disclosure herein, the inverter assembly may have at least two sides, comprising a first voltage side at a first side thereof, and a second voltage side at a second side thereof. The level of the first voltage may be at a first voltage range. The level of the second voltage may be at a second voltage range, higher than the first voltage range. According to some aspects of the disclosure herein, the first voltage range may be Low Voltage (LV - further explained below) and the second voltage range may be Medium Voltage (MV - also further explained below). For the purpose of the explanations which follow, the first side of the inverter assembly may be referred to herein as "LV-side" of the inverter assembly and the second side of the inverter assembly may be referred to herein as "MV-side" of the inverter assembly. The inverter assembly may be a bi-directional inverter assembly. For example, the inverter assembly may be configured to convert voltage from the LV-side to the MV-side, or from the MV-side to the LV-side.

Reference is now made to Figures 1A-1H, which are schematic illustrations of a power system, generally referenced 100, as well as of various aspects of power system 100, in accordance with aspects of the disclosure herein. Referring to Figure 1A, system 100 may comprise a power generation assembly 101, a protection device 106, and an inverter assembly 104. Inverter assembly 104 may comprise LV-side terminals 116A or 116B. Inverter assembly 104 may further comprise MV-side terminals 120A, 120B, or 120C. Power generation assembly 101 may comprise power generation assembly terminals 114A or 114B, which may be configured to be coupled to LV-side terminals 116A or 116B (e.g., via main busbars 118A or 118B). Protection device 106, which may comprise a switch 124-1 or a controller 126, may be connected between main busbar 118A and 118B. System 100 may further comprise an MCU 107 and a switchgear 109. Terminals at one side of switchgear 109 may be coupled to MV-side terminals 120A, 120B, or 120C. The terminals 121A, 121B, or 121C at the other side of switchgear 109 may be coupled to a power network 111 (e.g., a power-line grid, or a transformer). MCU 107 may be coupled to some or all of a controller 126 in protection device 106, to inverter assembly 104, or to switchgear 109. Controller 126 in protection device 106 may be coupled to switchgear 109.

As shall be further elaborated below, power generation assembly 101 may generate electrical power over main busbars 118A or 118B. Main busbars 118A or 118B may provide the electrical power generated by power generation assembly 101 to LV-side terminals 116A or 116B. Inverter assembly 104 may produce an AC electrical power at MV-side terminals 120A, 120B, or 120C. In some cases, an event of a change in an electrical characteristic (e.g., voltage, current, or power) at a portion or portions of system 100 (e.g., main busbars 118A or 118B) may result in damage to the some or all of the various components or devices of the power system 100. According to the disclosure, in case of an event of such a change in an electrical characteristic, protection device 106 may connect main busbars 118A or 118B to a reference terminal 128. The connection of main busbars 118A or 118B to reference terminal 128 may create a path for current to flow from main busbars 118A or 118B to the reference terminal 128. In such cases, it may be that the voltage between busbars 118A and 118B, or between either of busbar of 118A or 118B and the reference terminal 128 may reduce. This may reduce the probability of damage in general, and may reduce the probability of damage either to devices or components in system 100, or to humans (e.g., relative to systems which do not comprise a protection device such as protection device 106).

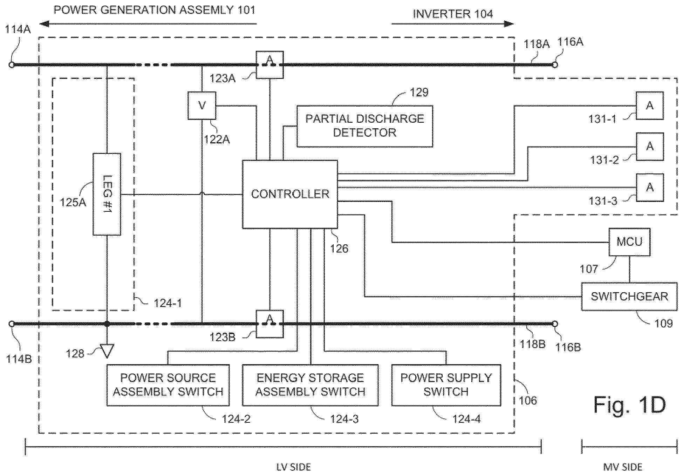

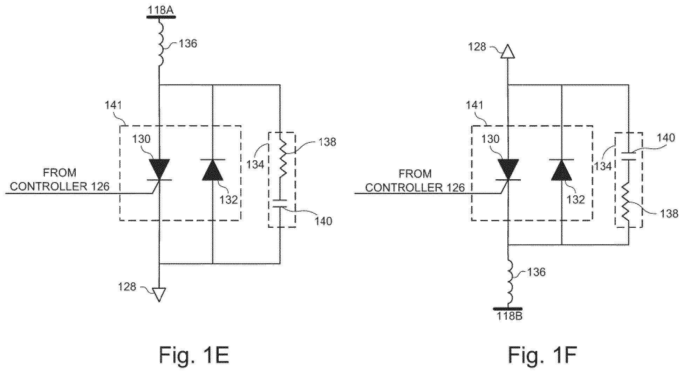

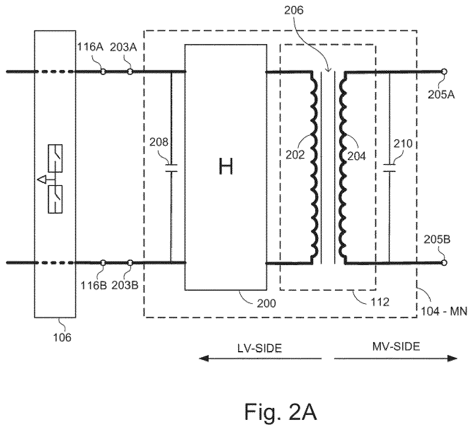

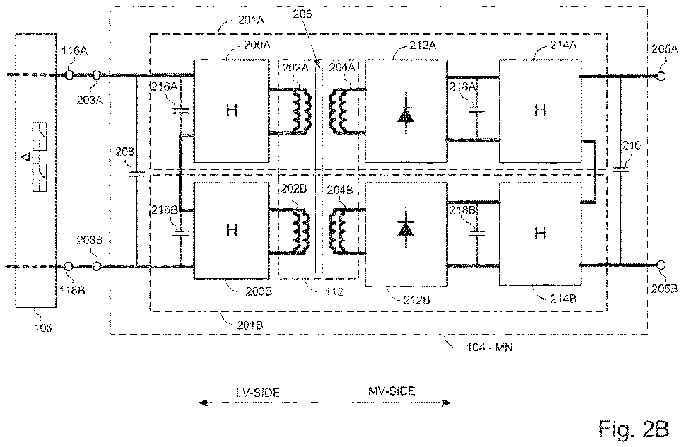

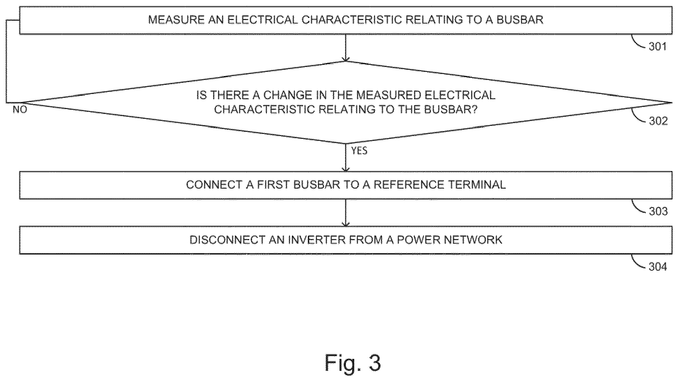

In the description herein, Figure 1A may relate to system 100 and the various components or devices therein. Figure 1B may relate to power generation assembly 101 of system 100. Figures 1C and 1D may relate to examples of implementations of protection device 106. Figures 1E-1H may relate to examples of implementations of a switched leg or switched legs in the protection device 106. Figures 2A and 2B may relate to implementation examples of an inverter in inverter assembly 104. Figure 3 may relate to a method in accordance the disclosure herein.

### Power generation assembly

Referring to Figure 1B, power generation assembly 101 may comprise at least a power source assembly 102. Power generation assembly 101 may comprise an energy storage assembly 103, a combiner 115 (which may be configured to combine power received from multiple power sources), or a power converter 113. It should be noted that energy storage assembly 103, combiner 115 and power converter 113 are optional. The output terminal of 147A or 147B power source assembly 102 may be coupled to busbars 135A or 135B respectively. The output terminal 149A or 149B of energy storage assembly 103 may be coupled to busbars 137A or 137B respectively. Busbars 135A or 135B or busbars 137A or 137B may be coupled to power generation assembly terminals 114A or 114B, for example, via combiner 115, or via a power converter 113. Power generation assembly terminals 114A or 114B may be coupled to main busbars 118A or 118B respectively. Power converter 113 may be a boost converter, a buck converter, a back-boost converter, or a back and boost converter. In some cases, power source assembly 102 or energy storage assembly 103 may be connected directly to power generation assembly terminals 114A or 114B. Busbar 135A of power source assembly 102 or busbar 137A of energy storage assembly 103 may be connected directly to power generation assembly terminal 114A. Busbar 135B of power source assembly 102 or busbar 137B of energy storage assembly 103 may be connected directly to power generation assembly terminal 114B.

Power source assembly 102 may comprise at least one power generator 108, wherein each may be configured to generate electrical power at the outputs thereof. A power generator 108 may be a DC power generator such as photovoltaic module, a battery (e.g., a lithium ion battery, lead-acid batteries, solid-state batteries, or a redox flow battery), a capacitor, or a fuel cell. Power generator 108 may be an AC power generator such as a wind turbine, a wave power generator, a fuel engine powered generator or the like. The power source assembly 102 may be an array or a field of DC power generators. In an array of power generators, a plurality of power generators 108 may be connected in series, which may form a string of power generators, such as generators string 151A or power generators string 151B. In addition, a plurality of strings of power generator, such as generators strings 151A and 151B, may be connected in parallel to form the array of power generators such as power source assembly 102. Furthermore, several arrays may be connected in series or in parallel to form a field of power generators. Each one of power generators 108 may be coupled to a respective power converter such as power converter 110. In the example of a DC power source, power converter 110 may be a boost converter, a buck converter, a back-boost converter, or a back and boost converter. A power source, such as power source assembly 102, may be capable of generating power on the order of hundreds of thousands of kilowatts, or even on the order of millions of kilowatts or tens of millions of kilowatts. Such power sources may be employed for commercial power generation purposes.

Energy storage assembly 103 may comprise a plurality of energy storage or supply devices 105 configured to store or supply electrical power at busbars 137A or 137B. Energy storage or supply devices 105 may be batteries, (e.g., a lithium ion battery, lead-acid batteries, solid-state batteries, redox flow batteries), capacitors, supercapacitors, or flywheel storage devices. Similar to power generator 108, each one of the energy storage or supply devices 105 may be coupled to a respective power converter 110. In the array of energy storage device, a plurality of energy storage or supply devices 105 may be connected in series, which may form a string of storage or supply devices, such as storage or supply string 153A or storage or supply string 153B. Also, plurality of strings of storage or supply, such as storage or supply strings 153A and 153B, may be connected in parallel to form an array of energy storage devices such as energy storage assembly 103. Furthermore, several arrays may be connected in series or in parallel to form a field of energy storage devices. Energy storage assembly 103 may be configured to either store electrical energy from main busbars 118A or 118B, or supply electrical energy to main busbars 118A or 118B. For example, each of energy storage or supply devices 105 may comprise an energy management unit configured to direct electrical energy to-or-from energy storage or supply devices 105. The energy storage assembly 103 may comprise an energy management unit, which may be configured to direct electrical energy to-or-from energy storage assembly 103.

Power generation assembly 101 may be configured to generate electrical power on main busbars 118A and 118B. In some power systems, main busbars 118A or 118B may exhibit a respective voltage level relative to a reference terminal (e.g., ground or circuit common), with a respective opposing polarity. For example, main busbar 118A may exhibit a positive voltage, VI, relative to the reference terminal (e.g., +500V, +750V, +1000V), or main busbars 118B may exhibit a negative voltage, V2, relative to the reference terminal (e.g., - 500V, -750V, -1000V). In some instances, the magnitudes of V1 and V2 may be equal.

### Inverter

Referring back to Figure 1A, inverter assembly 104 may convert the electrical energy generated by power generation assembly 101 to a 3-phase AC voltage between the MV-side terminals 120A, 120B, or 120C. The level of the voltage generated by power generation assembly 101 may be at a first voltage range. The level of the AC voltage generated by inverter assembly 104 may be at a second voltage range. The second voltage range may be higher than the first voltage range. Inverter assembly 104 may be exemplified as a multiple input cascaded inverter assembly, which may comprise a cascade of inverters for each phase produced by inverter assembly 104 at the MV-side thereof. For example, inverters 104-11 and 104-12 may be connected in cascade to produce a first phase, inverters 104-21 and 104-22 may be connected in cascade to produce a second phase, or inverters 104-31 and 104-32 may be connected in cascade to produce a third phase. The three phases may be connected in a delta configuration or in a start configuration. Each of inverters 104-11, 104-12, 104-21, 104-22, 104-31, or 104-32 may comprise at least an inverter switching circuit (e.g., half-bridge, full-bridge, or a T-type Neutral Point Clamped inverting circuit) and may comprise a transformer such as transformer 112. Each transformer 112 in inverter assembly 104 may provide galvanic isolation between the MV-side terminals 120A, 120B or 120C, and the LV-side terminals 116A or 116B. Transformer 112 may further perform a voltage step-up function (e.g., transformer 112 may be a step-up transformer) between the LV-side and the MV-side of the inverter 104-NM. Inverter 104-NM (e.g., inverters 104-11, 104-12, 104-21, 104-22, 104-31, or 104-32) may be further described below in conjunction with Figures 2A and 2B. Also, it is noted that although Figure 1A depicts a cascade of two inverters for each phase, this example should not be considered limiting. In general, one inverting module or a cascade of two or more inverting module may be employed for each phase. The choice of the number of phases (e.g., single phase inverter assembly or a 3-phase inverter assembly) and the number of inverters employed for each phase may depend on the power generated at the LV-side terminals 116A and 116B (e.g., as compared to the power generated at the MV-side terminals and the ratings of the inverters employed). In general, inverter assembly 104 may generate at least one phase employing at least one inverter.

### Switchgear

Switchgear 109 may comprise serial disconnectors 127A, 127B, or 127C. Serial disconnectors 127A, 127B or 127C may be circuit breakers, switches, relays or fuses. Serial disconnectors 127A, 127B or 127C may be configured to connect or disconnect inverter assembly 104 from power network 111 (e.g., in case of a fault), such as by connecting or disconnecting network side terminals 121A, 121B or 121C of switchgear 109 to or from MV-side terminals 120A, 120B or 120C of inverter assembly 104. For example, the serial disconnectors 127A, 127B and 127C in switchgear 109 may be configured to be open (e.g., non-conducting) or closed (e.g., conducting), such as by actuators (e.g., magnetic actuators). Switchgear 109 may comprise a sensor (e.g., voltage sensor, current sensor, or temperature sensor). Such sensors may provide measurements to MCU 107 or to controller 126, such as measurements relating to the voltage between, or the current through, switchgear terminals 121A, 121B, 121C, or power network 111. Such sensors may provide measurements to MCU 107 or to controller 126 relating to the voltage between, or the current through, MV-side terminals 120A, 120B, or 120C, or with regard to the temperature of switchgear 109. MCU 107 may be configured to generate an indication to switchgear 109 to operate the actuators to open or close the serial disconnectors 127A, 127B, or 127C based on the measurements from the sensor or sensors of switchgear 109. For example, a power surge (e.g., due to a lightning strike) may occur either at the LV-side, the MV-side or both. MCU 107 may output (e.g., in response to the power surge) an indication to switchgear 109 to operate the actuators to open the serial disconnectors 127A, 127B or 127C in switchgear 109 so as to disconnect inverter assembly 104 from power network 111. Controller 126 in protection device 106 may also be configured to output an indication to switchgear 109 to open or close the serial disconnectors 127A, 127B, or 127C.

### System 100 may be a "two way" system

Power generation assembly 101 may be configured to generate power for power network 111 or to receive power from power network 111. Under certain conditions, power generation assembly 101 may generate sufficient power (e.g., to meet power demands of network 111) such that a portion of this power may be conducted to inverter assembly 104 via main busbar 118A or 118B, and at least another portion of the generated power may be conducted to energy storage assembly 103 for storage. Inverter assembly 104 may generate an AC voltage at MV-side terminals 120A, 120B, or 120C. Under different conditions (e.g., photovoltaic cells at night, wind turbines during a windless day), power source assembly 102 may produce reduced power (e.g., not sufficient to meet demands of power network 111). Such as in such cases, energy storage assembly 103 may provide power over main busbars 118A or 118B, and that power may be conducted via main busbars 118A or 118B to inverter assembly 104. In other cases, the energy stored in energy storage assembly 103 may be in a depleted state. Such as in such cases, power from power network 111 may be conducted to MV-side terminals 120A, 120B, or 120C. Inverter assembly 104 may produce a voltage at the LV-side terminals 116A or 116B, where the level of the voltage may be in the LV range, and the voltage may be conducted to energy storage assembly 103 via main busbar 118A or 118B.

### Protection device

For the sake of simplicity, power generation assembly 101 may be described as generating DC voltage, and inverter assembly 104 may be described as producing AC voltage. However, this should not be considered as limiting (for example, power generation assembly 101 may produce AC voltage). Power source assembly 102 or energy storage assembly 103 generates DC voltage. Power converters 110 may draw power from the respective power generators 108 or the respective storage or supply devices 105 according to an algorithm, such as a maximum power point tracking (MPPT) algorithm, an impedance matching algorithm, a droop curve algorithm, or the like, and to output a DC voltage. Power converter 113 may draw power from either power source assembly 102, energy storage assembly 103 or both also according to according to an algorithm, such us a maximum power point tracking (MPPT) algorithm, an impedance matching algorithm, a droop curve algorithm, or the like, and to output a DC voltage. The Power generated by power generation assembly 101 may be in a first voltage range. Inverter assembly 104 may be configured to convert the DC voltage to AC voltage, and may be configured to step-up the AC voltage and provide the AC voltage to power network 111. The level of the AC voltage, generated by inverter assembly 104, may be at a second voltage range that may be higher than the first voltage range. According to aspects of the disclosure herein, the first voltage range and the second voltage range may relate to voltage classifications such as Low Voltage (LV), Medium Voltage (MV) or High Voltage (HV) mentioned above. Voltage range of each classification may vary between standards or jurisdictions (e.g., IEC 60038 or ANSI standard C84.1). For example, LV may relate to a voltage range up to 1kV (AC RMS line-to-line), MV may relate to a voltage range from 1kV to 35kV (AC RMS line-to-line), and HV may relate to a voltage range from 35kV to 230kV (AC RMS line-to-line). In some instances, power generation assembly 101 may generate LV up to 2kV DC. For the sake of simplicity, inverter assembly 104 may be described as converting LV DC to MV AC. However, this should not be considered as limiting. For example, inverter assembly 104 may change MV DC or AC to HV AC or from LV DC or AC to HV AC.

In power systems such as power system 100, there may be a risk of breakdown of the galvanic isolation provided by transformer 112. Such a risk may increase as the voltage difference between the MV-side of inverter 104 and the LV-side of inverter assembly 104 increases. Galvanic isolation breakdown (e.g., due to partial discharge, which may result, for example, in surface tracking or arcing) may create a conducting path between the MV-side of inverter assembly 104 and the LV-side of inverter assembly 104. Such a conducting path may result in a change of voltage between main busbars 118A and 118B at the LV-side of inverter assembly 104, or between one or both of main busbars 118A and 118B and a reference terminal. A conducting path between the MV-side of inverter assembly 104 and the LV-side of inverter assembly 104 may result in a change of current flowing through main busbars 118A or 118B or both. A conducting path between the MV-side of inverter assembly 104 and the LV-side of inverter assembly 104 may cause a change in an electrical characteristic (e.g., voltage, current or power) of either one of busbars 118A or 118B, or both main busbars 118A and 118B. This change in an electrical characteristic may propagate to power source assembly 102, or to energy storage assembly 103 in power generation assembly 101. For example, in some cases (e.g., due to a galvanic isolation breakdown), the voltage between main busbars 118A and 118B may rise above the open circuit voltage of power source assembly 102 or energy storage assembly 103 (e.g., to an MV level). Such a change in one or more of electrical characteristics in main busbars 118A or 118B may result in damage to the circuitry in inverter assembly 104, damage to power converters 110 or power converter 113, damage to some or all of power generators 108 in power source assembly 102, or damage to some or all of storage or supply devices 105 in energy storage assembly 103.

Power system 100 may comprise protection device 106. Protection device 106 may be configured to reduce the probability of damage, such as the damage mentioned above. Protection device 106 may be configured to either operate independently, or be activated by another device (for example, by MCU 107). Protection device 106 may be triggered in an event of a change, or an expected change of an electrical characteristic or of electrical characteristics of one or both of main busbars 118A or 118B (e.g., in the event that the change in the electrical characteristic exceeds or is expected to exceed a threshold). Protection device 106 may be triggered in an event of a change, or an expected change of an electrical characteristic or of electrical characteristics of one, some, or all of MV-side terminals 120A, 120B, or 120C.

In general, protection device 106, which may be further explained below, may comprise at least one electrical characteristic (e.g., voltage or current) sensor, such as voltage sensor 122, current sensor 123, or current sensors 131. Protection device 106 may comprise at least one switch, such as switch 124. Protection may comprise a controller 126. The at least one switch 124 or the at least one electrical characteristic sensor may be located at selected locations in power system 100. The at least one electrical characteristic sensor and the at least one switch may be located at the same portion (e.g., the same physical locations or the same electrical nodes) of power system 100 (e.g., at main busbars 118A and 118B). The at least one electrical characteristic sensor and the at least one switch may be located at different portions (e.g., different physical locations or different electrical nodes) of power system 100. For example, current sensors, such as current sensors 131-1, 131-2 or 131-3, may be coupled to MV-side busbars 119A, 119B or 119C respectively. A switch, such as switch 124, may be located at busbars 135A or 135B (Figure 1B) of power source assembly 102, at busbars 137A or 137B (Figure 1B) of energy storage assembly 103, or at busbars 139A or 139B a power supply 133 for protection device 106.

Reference is now made to Figure 1C, which illustrates an example of protection device 106 in power system 100 of Figures 1A-1B, according to aspects of the disclosure herein. In Figure 1C either one of main busbars 118A or 118B may exhibit a voltage relative to a reference terminal 128. Protection device 106 may comprise at least one switch such as main busbars switch 124-1. Protection device may comprise controller 126. Protection device 106 may comprise at least one electrical characteristic sensor configured to measure an electrical characteristic (e.g., voltage, current, power, temperature, magnetic field) of system 100, such as voltage sensor 122A. Protection device 106 may comprise additional electrical characteristic sensor or sensors, such as voltage sensor 122B, or current sensors 123A or 123B. The at least one switch or the at least one electrical characteristic sensor of protection device 106 may be located at an electrical node, to which either one of power source assembly 102, energy storage assembly 103 or both may be connected. For example, main busbars switch 124-1 or voltage sensor 122A may be coupled to main busbars 118A or 118B, between terminals 114A and 114B of power generation assembly 101 and LV-side terminals 116A and 116B.

Controller 126 may be coupled to first or second voltage sensors 122A or 122B. Controller 126 may be coupled to first or second current sensors 123A or to 123B. Controller 126 may be coupled to switch 124-1. Voltage sensor 122A may be connected between main busbar 118A and reference terminal 128. Voltage sensor 122A may be configured to measure a voltage between main busbar 118A and reference terminal 128, and may provide a measurement relating to this voltage to controller 126. Current sensor 123A may also be coupled to main busbar 118A. Current sensor 123A may be configured to measure a current through main busbar 118A, and may provide a measurement relating to this current to controller 126. Voltage sensor 122B may be connected between main busbar 118B and reference terminal 128. Voltage sensor 122B may be configured to measure a voltage between main busbar 118B and reference terminal 128, and may provide a measurement relating to this voltage to controller 126. Current sensor 123B may also be coupled to main busbar 118B. Current sensor 123B may be configured to measure a current through main busbar 118B, and may provide a measurement relating to this current to controller 126.

Still referring to the example depicted in Figure 1C, switched leg 125A of switch 124-1 may be connected between main busbar 118A and reference terminal 128. Switched leg 125B of switch 124-1 may be connected between main busbar 118B and reference terminal 128. Examples of switched leg 125A or 125B may be further described below in conjunction with Figures 1E-1H. Switch 124-1 may be configured to be controlled (e.g., by controller 126 or by MCU 107) to connect or disconnect main busbars 118A or 118B to or from a reference terminal. Switched leg 125A of switch 124-1 may be controlled by controller 126 to connect or disconnect main busbar 118A to, or from reference terminal 128 (e.g., ground or circuit common). Similarly, switched leg 125B of switch 124-1 may be controlled by controller 126 to connect or disconnect main busbar 118B to or from reference terminal 128.

Voltage sensors 122A or 122B may be implemented by employing a resistive or capacitive divider, a resistive or capacitive bridge, comparators (e.g., employing operation amplifiers), or the like. Current sensors 123A, 123B, 131-1, 131-2, or 131-3 may be implemented by employing a Current Transformer (CT) sensor, a Hall effect sensor, a zero flux sensor or the like. Controller 126 may be implemented as microcontroller, Field Programmable Gate Array (FPGA) or an Application Specific Integrated Circuit (ASIC) configured to carry out a set of control instructions.

Following is an example regarding the operation of protection device 106 with a switch 124-1 located between main busbar 118A and 118B. Under certain operating conditions of power system 100 (e.g., when the voltage level between main busbars 118A and 118B is at LV levels), switch 124-1 may be in a turn-off state and main busbars 118A and 118B may be disconnected from reference terminal 128. Voltage sensor 122A may measure a voltage between main busbar 118A and reference terminal 128, and may provide a measurement relating to the measured voltage to controller 126. Current sensor 123A may measure a respective current through main busbar 118A, and may provide a measurement relating to its current to controller 126. Voltage sensor 122B may measure a voltage between main busbar 118B and reference terminal 128, and may provide a measurement relating to the measured voltage to controller 126. Current sensor 123B may measure a respective current through main busbar 118B, and may provide a measurement relating to the measured current to controller 126.

In certain instances, such as when there is a change in a measured electrical characteristic of main busbar 118A (e.g., a change of the voltage between main busbar 118A and reference terminal 128 or a change in the current in main busbar 118A), controller 126 may control switched leg 125A to turn-on and connect main busbar 118A to reference terminal 128. In an on-state, switched leg 125A may create a path for current to flow from main busbar 118A to reference terminal 128. Energy on main busbar 118A may be directed to (e.g., discharged via) reference terminal 128. Thus, the voltage between main busbars 118A and reference terminal 128 may be reduce, which may have the advantage of reducing the risk of damage to power source assembly 102, or to energy storage assembly 103, or to both. In certain instances, such as when there is a change in a measured electrical characteristic of main busbar 118B (e.g., a change of the voltage between main busbar 118B and reference terminal 128 or a change in the current in main busbar 118B), controller 126 may control switched leg 125B to turn-on and connect main busbar 118B to reference terminal 128. In the on-state, switched leg 125B may create a path for the current to flow from main busbar 118B to reference terminal 128. As a result, energy on main busbar 118B may be directed to (e.g., discharged via) reference terminal 128. Thus, the voltage difference between main busbars 118B and reference terminal 128 may be reduced, which may have the advantage of reducing the risk of damage to power source assembly 102 or to energy storage assembly 103. In certain instances, such as when there is a change in a measured electrical characteristic of either one or both of main busbar 118A and 118B, controller 126 may control switchgear 109 to open serial disconnectors 127A, 127B or 127C, which may disconnect inverter assembly 104 from power network 111.

Controller 126 may turn-on switched legs 125A or 125B, or operate switchgear 109 to open the serial disconnectors 127A, 127B, or 127C (e.g., based on an event of a level of one or more measured electrical characteristics being higher or lower than a threshold). Such a threshold may be predetermined, dynamically determined (e.g., as a fraction of the measured voltage), or a combination thereof. Controller 126 may turn-on switched legs 125A or 125B based on an event that a rate of change (e.g., derivative) of one or more measured electrical characteristic exceeds (e.g., is higher or lower than) a threshold. The threshold may be determined over a measurement period. In case two or more different electrical characteristics are measured (e.g., voltage and current), controller 126 may turn-on switched legs 125A or 125B, such as based on any combination of events described above (e.g., when the voltage level exceeds a threshold and the derivative of the current exceeds a threshold, when either the level of both the voltage and the current exceed a threshold, or when the derivatives of both the voltage and the current exceeds a threshold). The above events are brought herein as examples only and should not be considered limiting. Other events involving second or higher order derivatives may also be employed. Similar to as described above, in the on-state, switched legs 125A or 125B may be conductive, and may connect main busbars 118A or 118B to reference terminal 128. Current may flow between main busbars 118A or 118B and reference terminal 128. As a result, the energy in either one or both of main busbar 118A or 118B may be directed to (e.g., discharged via) reference terminal 128. Thus, the voltage between busbars 118A or 118B, or between both of main busbars 118A or 118B, and reference terminal 128 may be reduced, which may have the advantage of reducing the risk of damage to power source assembly 102, or energy storage assembly 103, as well has to humans.

### Centralized or Distributed Protection Device

Referring to Figures 1A, 1B and 1C, protection device 106 may be a centralized device (e.g., located at an electrical node common to inverter assembly 104, power source assembly 102, or energy storage assembly 103), a distributed device, or a combination thereof. The location of the switches and sensors may be determined based on electrical or mechanical consideration such as electrical connectivity, availability of space or the like. For example, sensors 122 or 123 may be located at a different location than switch 124. Sensors 122 or 123 may be located at or near LV-side terminals 116A or 116B of inverter assembly 104. Switch 124 may be located at or near terminals 114A and 114B of power generation assembly. The at least one switch 124 may be located at electrical nodes in system 100 other than main busbars 118A or 118B. For example, protection device 106 may comprise switches 124-2, 124-3 or 124-4, which may all be coupled to controller 126. Switch 124-2 may be connected between busbars 135A and 135B of power source assembly 102, switch 124-3 may be connected between busbars 137A and 137B of energy storage assembly 103, and switch 124-4 may be connected between the busbars 139A and 139B of power supply 133 of protection device 106. As may be similar to switch 124-1, switches 124-2, 124-3, or 124-4 may comprise switched legs such as switched legs 125A or 125B. Similar to switch 124-1, controller 126 may be configured to control switches 124-2, 124-3, or 124-4 to connect or disconnect a respective electrical terminal or terminals to a reference terminal in an event of a change of an electrical characteristic in the respective busbars of 124-2, 124-3, or 124-4. When employing switches at various nodes in power system 100, each switch may be rated to the voltage or current at that node. For example, switch 124-4 may be rated to the maximum voltage and current produced by power supply 133, while switch 124-2 or 124-2 may be rated to the maximum voltage and current produced by power source assembly 102.

The above description may describe voltage sensors 122A or 122B and current sensors 123A or 123B being located on the LV-side of inverter assembly 104. Still referring to Figures 1A, 1B and 1C, protection device 106 may comprise electrical characteristics sensors at the MV-side of inverter assembly 104. For example, as described above, protection device 106 may comprise current sensors 131-1, 131-2, or 131-3, which may be coupled to MV-side busbars 119A, 119B, or 119C, respectively, and may be coupled to controller 126. Current sensors 131-1, 131-2, or 131-3 may be coupled to controller 126. Each one of current sensors 131-1, 131-2, or 131-3 may be configured to measure a current flowing through the respective one of MV-side busbars 119A, 119B, or 119C, and may provide a measurement relating to this current to controller 126. Controller 126 may control switches 124-1, 124-2, 124-3 or 124-4 to connect or disconnect the respective busbars thereof to or from a respective reference terminal, (e.g., based on the measurements from current sensors 131-1, 131-2 or 131-3). This may be similar to examples described above based on the current exceeding a threshold, or such as based on the derivative of the current exceeding a threshold. Current sensors 131-1, 131-2 or 131-3 may provide controller 126 with an indication that the risk of galvanic isolation breakdown has increased (e.g., even if such a breakdown did not occur yet). Consequently controller 126 may control (e.g., turn-on) switches 124-1, 124-2, 124-3 or 124-4, or may indicate to switchgear 109 to open serial disconnectors 127A, 127B or 127C (e.g., as a preemptive measure). This may have the advantage of reducing the probability of damage to inverter assembly 104, power source assembly 102 or energy storage assembly 103 as well has to humans. It is noted that current sensors 131-1, 131-2, and 131-3, located at the MV-side of inverter assembly 104, are shown herein as an example, and other configurations are possible. Voltage sensors may be located at the MV-side of inverter assembly 104. The voltage sensors may be configured to measure the voltage between each of MV-side busbars 119A, 119B or 119C, and a reference terminal (e.g., line-to-reference voltage), or measure the voltage between MV-side busbars 119A, 119B or 119C (e.g., line-to-line voltage).

Switches 124 may be turned-on in case of an event of a change in an electrical characteristic in the MV-side of inverter assembly 104. MCU 107 may receive an indication from inverter assembly 104 or from sensors located at power network 111 or at switchgear 109, that an electrical characteristic of MV-side 120A, 120B or 120C may have changed (e.g., it may have risen above a threshold, or the rate of change thereof may have exceeded a threshold). MCU 107 may indicate to controller 126 to turn-on either one, some or all of switches 124-1, 124-2, 124-3 or 124-4 as a preemptive measure, even if the conditions to turn-on switches 124-1, 124-2, 124-3 or 124-4 did not occur in the LV-side of inverter assembly 104 (e.g., levels of the voltages or current in main busbars 118A or 118B did not exceed a threshold). In Figures 1A-1D, MCU 107 is sometimes described as a single control unit, which may control inverter assembly 104 or switchgear 109. Nevertheless, MCU 107 may be implemented as several separate control units, each may control a respective aspect of power system 100, and each may communicate with each other. For example, one control unit may control inverter assembly 104 and another may control switchgear 109. These separate control units may each be referenced to a different reference terminal. In such a case, the signals between such separate control units are floating signals (e.g. using differential signals or optocoupling). Also, MCU 107 and controller 126 may be implemented in a single control unit.

### Partial Discharge Detector

Still referring to Figure 1C, protection device 106 may comprise a partial discharge detector 129 coupled to controller 126. Partial discharge detector 129 may be implemented as an optical detector configured to detect light in the infrared, visible, or ultraviolet range. This may allow the discharge detector 129 to detect an arc caused during a partial discharge. Partial discharge detector 129 may be an acoustic sensor configured to detect the sound generated during partial discharge. Partial discharge detector 129 may be implemented as a shockwave detector configured to detect the shockwave generated during partial discharge. Partial discharge detector 129 may be an electromagnetic radiation detector configured to detect Ultra High Frequency (UHF - between 300MHz - 1.5GHz) which may be generated during partial discharge. Partial discharge detector 129 may be a Transient Earth Voltage (TEV) detector, configured to detected electromagnetic radiation between 3MHz - 100MHz which may be generated during partial discharge. As a further example, partial discharge detector 129 may be a High Frequency Current Transformer, which may be configured to detect electromagnetic radiation between 0.5MHz - 50MHz which may be generated during partial discharge. Partial discharge detector 129 may measure a respective characteristic of the partial discharge, and may provide a measurement or measurements relating to this characteristic of the partial discharge to controller 126. Controller 126 may control switch 124-1 to turn-on switched leg 125A or 125B, or may control switchgear 109 to open the serial disconnectors 127A, 127B or 127C (e.g., based on an indication from partial discharge detector 129 that a partial discharged occurred or is about to occur).

Reference is made to Figure ID, which illustrates another example of protection device 106 according to aspects of the disclosure. In the example in Figure ID, main busbar 118A or main bus bar 118B may be coupled to the reference terminal. In such cases, switch 124 may comprise a single switched leg, such as switched leg 125A. Also a single voltage sensor, such as voltage sensor 122A may be sufficient to measure the voltage between main busbar 118A and reference terminal 128, which may also be main busbar 118B. Controller 126 may activate switches 124-1, 124-2, 124-3, or 124-4, and may control switchgear 109 to open the serial disconnectors 127A, 127B or 127C.

### Switched legs

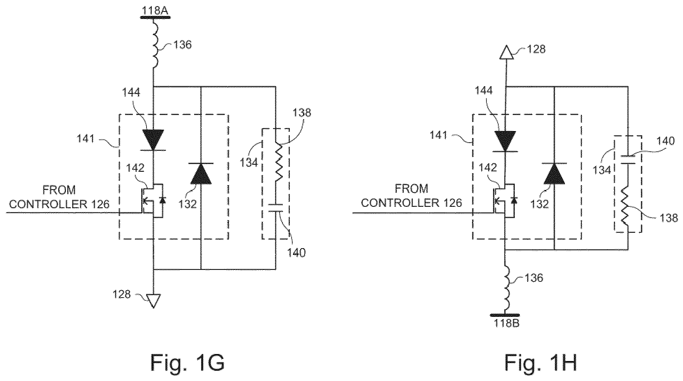

Reference is now made to Figures IE, IF, 1G, and 1H, which show various examples of implementations of switched legs 125A or 125B in protection device 106 in system 100, according to aspects of the disclosure herein. For example, the configuration shown in Figures 1E and 1G may be an example of switched leg 125A (Figures 1C and ID). The configurations shown in Figures 1F and 1H may be an example of switched leg 125B (Figure 1C). As mentioned above in conjunction with Figure 1C, switched leg 125A of switch 124-1 may be controlled by controller 126 to connect or disconnect main busbar 118A to or from reference terminal 128. Similarly, switched leg 125B of switch 124-1 may be controlled by controller 126 to connect or disconnect main busbar 118B to-or-from reference terminal 128. Switched legs 125A or 125B may comprise a switching circuit 141. Switching circuit 141 may comprise a power switch or power switches. For example, switching circuit 141 may comprise a power MOSFET, IGBT, BJT, SiC, GaN, super junction transistors, a power diode, a thyristor, a DIAC, a TRIAC, or any combination thereof. It is noted that although Figures 1E-1H may relate to switched legs 125A or 125B of switch 124-1, these exemplary implementations may be employed with any of the switched legs in switches 124. The configurations shown in Figures IE and IF may comprise a switching circuit 141, which may comprise a thyristor 130 connected in parallel with a diode 132. The configurations shown in Figures 1G and 1H may comprise a switching circuit 141, which may comprise a transistor 142 a diode 144 and diode 132, as further elaborated below.

A switched leg 125A or 125B may comprise a snubber circuit 134, or a choke 136. Snubber circuit 134 may comprise a resistor 138 connected in series with a capacitor 140. As may be shown in Figures IE-IF, snubber circuit 134 may be connected in parallel with switching circuit 141. Choke 136 may be connected in series with the parallel connection of switching circuit 141 or snubber circuit 134.

Referring to Figure IE, the anode of thyristor 130 may be coupled to main busbar 118A (e.g., via choke 136). The cathode of thyristor 130 may be coupled to reference terminal 128. The cathode of diode 132 may be coupled to main busbar 118A (e.g., via choke 136). The anode of diode 132 may be coupled to reference terminal 128. Under certain operating conditions of power system 100, thyristor 130 may be in the off state (e.g., thyristor 130 may be non-conductive or disconnect main busbar 118A from reference terminal 128), and diode 132 may be reversed biased (e.g., diode 132 may be in the off state and may be non-conductive or disconnect main busbar 118A from reference terminal 128). (E.g., in the event of a decrease of the voltage between main busbar 118A and reference terminal 128, such that the voltage at main busbar 118A is lower than the voltage at the reference terminal) diode 132 may become forward biased (and turn-on) and may create a path for current to flow between reference terminal 128 and main busbar 118A (e.g., diode 132 becomes conductive or connects reference terminal 128 and main busbar 118A). In such instances, it may be that the voltage between main busbar 118A and reference terminal 128 is reduced. (E.g., in the event of an increase of the voltage between main busbar 118A and reference terminal 128) controller 126 may turn-on thyristor 130, which may create a path for the current to flow between main busbar 118A and reference terminal 128 (e.g., thyristor 130 may be conductive or connect main busbar 118A from reference terminal 128). In such instances, it may be that the voltage between main busbars 118A and reference terminal 128 is reduced. The reduction in voltage may reduce the risk of damage to power source assembly 102, to energy storage assembly 103, to converter 110, to converter113, or to the circuitry in inverter assembly 104.

Referring to Figure IF, the anode of thyristor 130 may be coupled to reference terminal 128. The cathode of thyristor 130 may be coupled to main busbar 118B (e.g., via choke 136). The cathode of diode 132 may be coupled to reference terminal 128. The anode of diode 132 may be coupled to main busbar 118B (e.g., via choke 136). Under certain operating conditions of power system 100, thyristor 130 may be in the off state and may be non-conductive (e.g., disconnect main busbar 118B from reference terminal 128), or diode 132 may be reversed biased (e.g., also in the off state and non-conductive or disconnect main busbar 118B from reference terminal 128). (E.g., in the event of an increase of voltage between main busbar 118B and reference terminal 128 such that the voltage at main busbar 118B is higher than the voltage at reference terminal 128) diode 132 may become forward biased (e.g., turn-on and conduct or connect main busbar 118B with reference terminal 128) and may create a path for current to flow between main busbar 118B and reference terminal 128. In such instances, the voltage between main busbar 118B reference terminal 128 may be reduced. (E.g., in the event of a decrease of the voltage between main busbar 118A and reference terminal 128) controller 126 may turn-on thyristor 130, which may create a path for the current to flow between reference terminal 128 and main busbar 118B (e.g., thyristor 130 may be conductive or connect main busbar 118B from reference terminal 128). In such instances, the voltage between main busbar 118B and reference terminal 128 may be reduced. The reduction in voltage may reduce the risk of damage to DC power source assembly 102, to energy storage assembly 103, to converter 110, to converter 113, or to the circuitry in inverter assembly 104.

Still referring to Figures IE and IF, thyristor 130 and diode 132 may each switch between an off-state and an on-state, which may result in changes in the voltage across, or the current through, thyristor 130 or diode 132. In some instances, the rate of changes of the voltage (dv/dt) and the rate of changes of the current (di/dt) may be higher than the rating or ratings of the rate of change of current or voltage of thyristor 130 or diode 132 employed in switch 124. Switch 124 may comprise a snubber circuit 134 or a choke 136 (e.g., for when the rate of change of voltage or current exceeds the ratings of thyristor 130 or of diode 132). Snubber circuit 134 may limit the rage of changes of voltage. Choke 136 may limit the rate of changes of current. It should be appreciated that snubber circuit 134 and choke 136 may together function a second order Low Pass Filter (LPF), where switching circuit 141 may be connected across the output terminals of this LPF. Furthermore, Thyristor 130 and diode 132 in switching circuit 141 may be incorporated in a same module (e.g., as a Silicon Controlled rectifier).

Referring to Figures 1G and 1H, switching circuit 141 may comprise a transistor 142, a diode 144. Switching circuit 141 may comprise a diode 132. Transistor 142 may be connected in series with diode 144. Diode 132 may be connected in parallel with the series connection between transistor 142 and diode 144. In the example of switching circuit 141 in Figures 1G and 1H, serially connected transistor 142 and diode 144 may replace thyristor 130 in Figures IE or IF. Transistor 142 may be a Metal Oxide Semiconductor Field Effect Transistor (MOSFET). The cathode of diode 144 may be coupled to the drain of the MOSFET 142. Referring to Figure 1G, the anode of diode 144 may be coupled to busbar 118A (e.g. via choke 136) and the emitter of transistor 142 may be coupled to reference terminal 128. Referring to Figure 1H, the anode of diode 144 may be coupled to reference terminal 128. The emitter of transistor 142 may be coupled to busbar 118B (e.g., via choke 136). As mentioned above, transistor 142 may be a MOSFET. A MOSFET is a bidirectional device, which may conduct current in both directions. Diodes 132 and 144 may be added to switching circuit 141 (e.g., because the body diode of the MOSFET may not be rated to carry the required current for which switching circuit 141 is directed at). Diodes 132 and 144 may be omitted (e.g., in cases where the body diode of the MOSFET is rated to carry the required current for which switching circuit 141 is directed at). Transistor 142 may be an Insulated Gate Bipolar Transistor (IGBT), which may conduct current between the collector and emitter thereof. This may have the advantage of reducing cost and complexity, such as by omitting diode 144.

Referring to Figures 1G and 1H, diode 132 may operate similar to the description above in conjunction with Figures IE and IF. Referring to Figure 1G, (e.g., in the event of an increase of the voltage between main busbar 118A and reference terminal 128) controller 126 may turn on transistor 142, and diode 144 may become forward biased. In such instances, a path may be created for the current to flow between main busbar 118A and reference terminal 128 (e.g., main busbar 118A may be connected with reference terminal 128). Referring to Figure 1H, (e.g., in the event of a decrease of the voltage between main busbar 118B and reference terminal 128) controller 126 may turn on transistor 142, and diode 144 may become forward biased. In such instances, a path may be created for the current to flow between reference terminal 128 and main busbar 118B (e.g., main busbar 118B may be connected with reference terminal 128).

Figures 1A-1H disclose examples of protection device 106 and aspects thereof that may reduce the risk of damage to power source assembly 102 or power storage assembly 103 (e.g., in the event of a breakdown of the galvanic isolation in inverter assembly 104). A protection device, such as protection device 106, may be suitable for protecting power source assembly 102 against other potentially destructive events (e.g., a power surge due to a lightning strike or the like), which may occur on the LV-side or the MV-side of inverter assembly 104 or both. Protection device 106 may protect against any change or expected change in an electrical characteristic of main busbars 118A or 118B, busbars 135A or 135B, or busbars 137A or 137B, regardless of the reason that caused that change. In addition, as mentioned above, controller 126 may be configured to operate or indicate to switchgear 109 to disconnect MV-side terminals 120A, 120B or 120C from terminals 121A, 121B or 121C, which may disconnect inverter assembly 104 from power network 111. However, it is noted that the difference between the response times of switchgear 106 and the response time of protection device 106 may be an order of magnitude or higher. For example, the response time of a switchgear, such as switchgear 109, may be on the order of tens of milliseconds (e.g., between 10 milliseconds and 100 milliseconds) or more, and the response time of protection device 106 may be on the order of microseconds (e.g., between 1 microsecond and 10 microseconds) or less. As such, in some instances, protection device 106 may react faster than switchgear 109 (e.g., in an event of a change in an electrical characteristic of main busbars 118 and 118B) which may have the advantage of reducing the likelihood of damage to power source assembly 102 or to energy storage assembly 103. Damage to power source assembly 102 or energy storage assembly 103 may result in significant cost. For example, if power source assembly 102 is an array of photovoltaic modules or energy storage assembly 103 is an array of batteries, a change in an electrical characteristic of main busbars 118A or 118B may result in damage to some or all of the photovoltaic modules or batteries in the array. Such damage may warrant replacement of the modules or batteries. Reducing the probability of damage to power source assembly 102 or energy storage assembly 103 may result in an increase of the probability of damage to inverter assembly 104. However, the cost of each of power source assembly 102 or energy storage assembly 103 may be, in some cases, as much as ten times higher or even more, than the cost of inverter assembly 104. Protection device 106 may be a non-destructing device (e.g., in the event of false detection, protection device 106 may be designed not to be destroyed and may be re-used a plurality of times).

### Inverters

Figure 2A and 2B, show examples of an inverter 104-MN, which may correspond to one of inverters 104-11, 104-12, 104-21, 104-22, 104-31 or 104-32 (as may be depicted in Figure 1A). Referring to Figure 2A, inverting module 104-MN may an inverter switching circuit 200. Inverting module may comprise a transformer 112. Inverter 104-MN may comprise an LV-side capacitor 208 or an MV-side capacitor 210. Transformer 112 may comprise primary windings 202 and secondary windings 204, which may be wound around a common core 206. Common core 206 may comprise one or more ferromagnetic materials. The module LV-side terminals 203A or 203 of inverting module 104-MN may be coupled to LV-side terminals of inverter switching circuit 200. The MV-side terminals (not shown) of inverter switching circuit 200 may be coupled to the LV-side terminals (not shown) of transformer 112. Secondary windings 204 of transformer 112 may be coupled to inverting module MV-side terminals 205A or 205B. LV-side capacitor 208 may be connected across module LV-side terminals 203A and 203B, and MV-side capacitor 210 may be connected across module MV-side terminals 205A and 205B.

Inverter switching circuit 200 may be configured to generate a pulsed voltage (e.g., square-wave, or a stepped pulsed wave, a two level Pulse Width Modulation - PWM signal, a multi-level PWM signal) at the MV-side of inverter switching circuit 200. Inverter switching circuit 200 may be implemented by a transistor half-bridge, full-bridge (H-Bridge), flying capacitor, cascaded-H-bridge, Neutral Point Clamped (NPC), A-NPC, or a T-type NPC inverting circuit employing two or more conversion levels. Inverter switching circuit 200 may be operated (e.g., controlled by MCU 107) by employing a PWM signal. Inverter switching circuit 200 may operate at a switching frequency between 1Hz - 10MHz. For example, inverter switching circuit 200 may operate at a switching frequency between 16 KHz - 200 KHz, which may be frequencies at which switching losses are reduced for IGBT and power FETs operating in a resonant circuit. In another example, inverter switching circuit 200 may operate at a switching frequency of 30 KHz.

Transformer 112 may provide galvanic isolation between module MV-side terminals 205A or 205B, and module LV-side terminals 203A or 203B (which may also provide galvanic isolation between MV-side terminals 120A, 120B or 120C of inverter assembly 104 and LV-side terminals 116A or 116B). One or both of primary windings 202 and secondary windings 204 may be encapsulated in a resin such as epoxy (e.g., cast in vacuum to reduce the number of air bubbles). Primary windings 202 and secondary windings 204 may be wound around a common core 206, which may comprise ferromagnetic materials. Primary windings 202 or secondary windings 204 may comprise bifilar windings, and may be wound on a different leg of core 206. Transformer 112 may be a step-up transformer (e.g., in which the number of windings in secondary windings 204 is larger than the number of windings in primary windings 202). The ratio between the output voltage and the input voltage may be equal to the ratio between the number of windings in secondary windings 204 and the number of windings in primary windings 202. A voltage on a secondary side of a transformer (e.g., the side of the secondary windings) may be given by V_{sec} = Vₚᵣᵢₘ ^{∗} N/M, where Vsec represents a voltage on the secondary side, Vₚᵣᵢₘ represents a voltage on the primary side of the transformer (e.g., the side of the primary windings), M is the number of turns of windings on the primary side, and N is the number of turns of windings on the secondary side.

Inverting module 104MN may receive a voltage across inverting module LV-side terminals 203A and 203B (e.g., when converting power from the LV-side of inverter assembly 104 to the MV-side of inverter assembly 104). LV-side capacitor 208 may stabilize the voltage between inverting module LV-side terminals 203 and 203B. MCU 107 may control inverter switching circuit 200 to generate a pulsed signal (e.g., square-wave, stepped pulsed wave) at the MV-side of transformer 112. Transformer 112 may step-up the voltage generated by inverter switching circuit 200 (e.g., from LV to MV). MV-side capacitor 210 may filter the voltage from inverter switching circuit 200 to generate an AC voltage (e.g., sine-wave) between inverting module MV-side terminals 205A and 205B.

Referring to Figure 2B, inverter 104-MN may comprise a plurality of cascaded conversion modules. The plurality of cascaded-conversion modules may comprise two conversion modules, such as a first conversion module 201A and a second conversion module 201B. Inverter 104-MN may comprise an LV-side capacitor 208 or an MV-side capacitor 210. First conversion module 201A may comprise a first inverter switching circuit 200A or a first rectifier 212A. Second conversion module 201B may comprise a second inverter switching circuit 200B or a second rectifier 212B. First conversion module 201A may comprise a third inverter switching circuit 214A. Second conversion module 201B may comprise a fourth inverter switching circuit 214B. First conversion module may comprise a first LV-side capacitor 216A or a first rectifying capacitor 218A. Second conversion module 201B may comprise a second LV-side capacitor 216B or a second rectifying capacitor 218B. Inverting module 104-MN may comprise a transformer 112.

Third inverter switching circuit 214A or fourth inverter switching circuit 214B may be operated at a first switching frequency. First inverter switching circuit 200A or second inverter switching circuit 200B may be operated at a second switching frequency. The first switching frequency may be different from the second switching frequency. For example, the first switching frequency may be lower than the second switching frequency, which may reduce the frequency of ripple current at the output of inverting module 104-MN. First rectifier 212A or second rectifier 212B may be passive rectifiers (e.g., diode bridges). First rectifier 212A or second rectifiers 212B may be active rectifiers, such as switch bridges employing switches (e.g. MOSFET transistors or other).

Transformer 112 may comprise first primary windings 202A and first secondary windings 204A associated with first conversion module 201A. Transformer 112 may comprise second primary windings 202B and second secondary windings 204B associated with second conversion module 201B. First primary windings 202A, first secondary windings 204A, second primary windings 202B, or second secondary windings 204B may be wound around a common core 206. The first primary winding 202A, second primary winding 202B, first secondary winding 204A or second secondary windings 204B may comprise bifilar windings. The first primary winding 202A and the second primary winding 202B may be wound around a first leg of common core 206. First secondary winding 204A and second secondary windings 204B may be wound around a second leg of common core 206. First primary windings 202A, second primary windings 202B, first secondary windings 204A, or second secondary windings may be encapsulated in a resin such as epoxy. Transformer 112 may provide galvanic isolation between the MV-side terminals 205A or 205B of inverting module 104-MN, and between the LV-side terminals 203A or 203B of inverting module 104-MN. As a result, this may provide galvanic isolation between MV-side terminals 120A, 120B or 120C of inverter assembly 104, and LV-side terminals 116A or 116B of inverter assembly 104. Transformer 112 may be a step-up transformer (e.g., in which the number of windings in secondary windings 204A and 204B is larger than the number of windings in primary windings 202A and 202B).

LV-side capacitor 208 may be connected between module LV-side terminals 203A and 203B. First LV-side capacitor 216A may be connected across the LV-side terminals of first inverter switching circuit 200A. Second LV-side capacitor 216B may be connected across the LV-side terminals of second inverter switching circuit 200B. First LV-side capacitor 216A or second LV-side capacitor 216B may form a capacitive divider across module LV-side terminals 203A and 203B. The MV-side of first inverter switching circuit 200A may be coupled to first primary windings 202A. The MV-side of inverter second switching circuit 200B may be coupled to second primary windings 202B. The LV-side of first rectifier 212A may be coupled to the first secondary windings 204A. The LV-side of second rectifier 212B may be coupled to the second secondary windings 204B. The MV-side of first rectifier 212A may be coupled to the LV-side of third inverter switching circuit 214A. First rectifying capacitor 218A may be connected across the MV-side of first rectifier 212A. The MV-side of second rectifier 212B may be coupled to the LV-side of fourth inverter switching circuit 214B. Second rectifying capacitor 218B may be connected across the MV-side of second rectifier 212B. The MV-side of third inverter switching circuit 214A and fourth inverter switching circuit 214B may be cascaded (e.g., the negative output terminal of third inverter switching circuit 214A is coupled to the positive MV-side terminal of fourth inverter switching circuit 214B).

Inverting module 104-MN may receive a voltage across module LV-side terminals 203A and 203B (e.g., when converting power from the LV-side of inverter assembly 104 to the MV-side of inverter assembly 104). LV-side capacitor 208 may stabilize the voltage between module LV-side terminals 203A and 203B. First LV-side capacitor 216A and second LV-side capacitor 216B may divide the DC voltage across module LV-side terminals 203A and 203B between first conversion module 201A and second conversion module 201B. MCU 107 (Figure 1A) may control first inverter switching circuit 200A to generate a pulsed voltage at the LV-side of first primary windings 202A. MCU 107 (Figure 1A) may control second inverter switching circuit 200B to generate a pulsed voltage at the LV-side of second primary windings 202B. Transformer 112 may step-up the voltage generated by first inverter switching circuit 200A or second inverter switching circuit 200B (e.g., from LV to MV at first secondary windings 204A or second secondary windings 204B). The voltage from the MV-side of transformer 112 may be input into first rectifier 212A or second rectifier 212B. The first rectifier 212A or second rectifier 212B may each output a respective rectified DC voltage, which is filtered by a respective one of rectifying capacitor 218A or 218B. The filtered rectified DC voltage from first and second rectifiers 212A or 212B may be input into a respective one of third inverter switching circuit 214A in first conversion module 201A or fourth inverter switching circuit 214B in second conversion module 201B. MCU 107 may control each one of third inverter switching circuit 214A or fourth inverter switching circuit 214B to generate a pulsed voltage output. The outputs of third inverter switching circuit 214A or fourth inverter switching circuit 214B may be cascaded to generate a cascaded pulsed voltage output. Capacitor 210 may filter the cascaded pulsed output to produce an AC voltage between MV-side terminals 120A, 120B, or 120C.

### Protecting Power Generation Assembly

Reference is now made to Figure 3, which shows an example method for protecting a power generation assembly according to aspects of the disclosure. In step 301, an electrical characteristic related to a busbar may be measured. The busbar may be coupled to a respective side of an inverter. The measured electrical characteristic may be voltage, current or power, or any combination thereof. According to the disclosure, an electrical characteristic or electrical characteristics of more than one busbar may be measured. For example, with reference to Figures 1A-1D, a voltage sensor 122A may measure the voltage between busbar 118A and reference terminal 128. Current sensor 123A may measure the current in busbar 118A. Voltage sensor 122B may measure a voltage between busbar 118B and reference terminal 128. Current sensor 123B may measure the current in busbar 118B. Current sensor 131-1, 131-2, or 131-3 (e.g., coupled to the MV-side of inverter assembly 104) may measure the current in respective busbars 119A, 119B, or 119C.

In step 302, the occurrence of an event of a change in the measured electrical characteristic or electrical characteristics relating to the busbar may be identified. For example, an event of a change in the measured electrical characteristic or electrical characteristics may be identified by controller 126 (which may be shown in Figures 1A-1E). In another example, an event of a change in the measured electrical characteristic or electrical characteristics may be identified by MCU 107 (which may be shown in Figures 1A). An event of change in the measured electrical characteristic or electrical characteristics may be, for example, when the measured electrical characteristic or electrical characteristics exceed a threshold. An event of a change in the measured electrical characteristic or electrical characteristics may be, for example, when the derivative of the measured electrical characteristic exceeds a threshold over a measurement period. When an event of a change in the measured electrical characteristic is identified, the method proceeds to procedure 303. When an event of a change in the measured electrical characteristic is not identified, the method returns to procedure 301.

In step 303, a busbar, which may be coupled to a first side of the inverter assembly, may be coupled to a reference terminal, based at least on the measurement of the first electrical characteristic. For example, with reference to Figures 1A-1D, controller 126 may indicate to switch 124 to turn-on and connect, for example, busbar 118A (coupled to the first side of inverter assembly 104) to reference terminal 128. In some cases, a second busbar (e.g., busbar 118B) coupled to the first side of the inverter assembly may also be coupled to the reference terminal (e.g., based on the measurement either of the first electrical characteristic or of a second electrical characteristic, or based on the measurements of both the first electrical characteristic and the second electrical characteristic).

In step 304, the inverter assembly may be disconnected from a power network (e.g., based at least on the measurement of the first electrical characteristic). For example, (as may be shown in Figures 1A and 1B), inverter assembly 104 may be disconnected from power network 111 by opening serial disconnectors 127A, 127B, or 127C in switchgear 109. Switchgear 109 may be controlled, for example, either by controller 126 or MCU 107, or by both controller 126 and MCU 107.

It is noted that according to the present disclosure, either one or both of steps 303 and 304 may be carried out. Furthermore, in case both steps 303 and 304 are carried out, the order of these steps may change (e.g., step 304 may be carried out before step 303). Also, steps 303 and 304 may be carried out concurrently.

The claim set as filed in the priority-providing application is repeated herein as clauses in order to preserve that subject matter in the present application. The present application also discloses:
Clause 1: A protection device comprising:
   at first sensor, coupled to a first busbar of a plurality of busbars, configured to measure a respective first electrical characteristic of the first busbar;
   a first switch, connected between the first busbar and a reference terminal, configured to connect and disconnect the first busbar, to and from the reference terminal; and
   a controller, coupled to the first sensor and to the first switch, configured to control the first switch to connect the first busbar to the reference terminal based on the measurement of the first electrical characteristic.
Clause 2: The protection device according to clause 1, wherein the plurality of busbars are coupled to first side terminals at a first side of an inverter assembly, the inverter assembly further comprising:
   second side terminals at a second side of the inverter assembly;
   at least one inverter switching circuit configured to generate a pulsed voltage; and
   at least one transformer.
Clause 3: The protection device according to clause 2, wherein the inverter assembly comprises a cascade of inverters for each phase at the second side of the inverter assembly.
Clause 4: The protection device according to any one of clauses 2-3, wherein the at least one transformer further provides isolation between the second side terminals and the first side terminals of the inverter.
Clause 5: The protection device according to any one of clauses 2-4, wherein the first switch is located between the plurality of busbars coupled to the first side of the inverter assembly.
Clause 6: The protection device according to any of clauses 2-5, wherein the controller is further coupled to a switchgear, wherein the switchgear is coupled to the second side terminals and is configured to connect and disconnect the inverter assembly from a power network, and wherein the controller is further configured to indicate to the switchgear to disconnect the inverter from the network based on a measurement of a first electrical characteristic indicating a change in the first electrical characteristic.
Clause 7: The protection device according to any of the preceding clauses, wherein the plurality of busbars connects a power generation assembly to the inverter assembly, and wherein the power generation assembly is configured to:
   generate electrical energy, or
   store electrical energy.
Clause 8: The protection device according to clause 7, wherein the power generation assembly comprises at least one of:
   at least one photovoltaic module;
   at least one battery;
   at least one fuel cell;
   at least one wind turbine;
   at least one wave power generator; or
   at least one fuel engine powered generator.
Clause 9: The protection device according to any one of clauses 7-8, wherein the power generation assembly comprises a power source assembly, wherein the power source assembly comprises a plurality of power generators configured to generate electrical power.
Clause 10: The protection device according to clause 9, wherein each of the plurality of power generators is coupled to a respective power converter.
Clause 11: The protection device according to any one of clauses 9-10, wherein the power source assembly comprises a second plurality of busbars, and wherein the first switch is located between the second plurality of busbars.
Clause 12: The protection device according to any one of clauses 7-11, wherein the power generation assembly comprises an energy storage assembly, wherein the energy storage assembly comprises a plurality of energy storage devices, wherein each energy storage device is configured to store electrical power from a third plurality of busbars of the energy storage assembly.
Clause 13: The protection device according to clause 12, wherein each of the plurality of energy storage devices comprises a respective energy management unit configured to direct electrical energy to or from the respective storage device.
Clause 14: The protection device according to any one of clauses 12-13, wherein the energy storage assembly comprises an energy management unit configured to direct electrical energy to or from the energy storage assembly.
Clause 15: The protection device according to any one of clauses 12-14, wherein the first switch is located between the third plurality of busbars.
Clause 16: The protection device according to clause 2, wherein a level of a first voltage at the first side of the inverter is at a first voltage, wherein the inverter is configured to generate an alternating current (AC) voltage between the second side terminals of the inverter, and wherein the level of the AC voltage is at a second voltage higher than the first voltage.
Clause 17: The protection device according to clause 16, wherein the first voltage is a Low Voltage (LV) and the second voltage is a Medium Voltage (MV).
Clause 18: The protection device according to clause 17, wherein the Low Voltage is between 0 volts to 2000 volts, and wherein the Medium Voltage is between 2000 volts and 35,000 volts.
Clause 19: The protection device according to any of the preceding clauses, further comprising a second sensor coupled to the first busbar and to the controller, wherein the second sensor is configured to measure a second electrical characteristic of the first busbar, and
   wherein the controller is further configured to control the first switch to connect the first busbar to the reference terminal further based on the second measurement of the second electrical characteristic indicating a change in the second electrical characteristic. Clause 20: The protection device according to any of the preceding clauses further comprising:
      a third sensor, configured to measure a third electrical characteristic of a second busbar of the plurality of busbars, and to generate a measurement of the third electrical characteristic;
      a second switch, connected between the second busbar and the reference terminal, configured to connect and disconnect the second busbar to and from the reference terminal; and
   wherein the controller is further coupled to the third sensor and to the second switch, the controller further configured to control the second switch to connect the second busbar to the reference terminal based on the measurement of the third electrical characteristic indicating a change in the third electrical characteristic.
Clause 21: The protection device according to clause 20, further comprising a fourth sensor coupled to the second busbar, wherein the fourth sensor is configured to measure a fourth electrical characteristic of the second busbar,
wherein the controller is further configured to control the second switch to connect the second busbar to the reference terminal further based on the measurement of the fourth electrical characteristic indicating a change in the fourth electrical characteristic.
Clause 22: The protection device according to clauses 1 and 20, wherein the controller is further coupled to a main control unit, and wherein the main control unit is configured to indicate to the controller to turn-on the first switch or the second switch.
Clause 23: The protection device according to clause 20, wherein each of the first switch and the second switch is configured to connect and disconnect the respective first busbar and second busbar to the reference terminal within 10 microseconds.
Clause 24: The protection device according to any one of clauses 20-23, wherein the reference terminal is one terminal of the first busbar or the second busbar.
Clause 25: The protection device according to any of the preceding clauses, wherein the reference terminal is a ground.
Clause 26: The protection device according to clause 21, wherein each of the first electrical characteristic, the second electrical characteristic, the third electrical characteristic and the fourth electrical characteristic is at least one of:
   voltage;
   current; or
   power.
Clause 27: The protection device according to any of the preceding clauses, wherein the first switch comprises a switching circuit at least one of:
   a first diode;
   a first transistor;
   a thyristor connected in parallel with a second diode;
   a second transistor connected in series with a third diode, and a fourth diode connected in parallel with the series connected second transistor and third diode;
   a diac; or
   a triac.
Clause 28: The protection device according to clause 27, wherein the first switch further comprise a snubber circuit connected in parallel with the switching circuits, wherein the snubber circuit comprises a resistor connected in series with a capacitor.
Clause 29: The protection device according to any one of clauses 27-28, further comprising a choke connected in series with the switching circuits.
Clause 30: The protection device according to clause 1, wherein the first switch comprises a thyristor and a diode,
   wherein the diode is connected in parallel with the thyristor,
   wherein the thyristor configured to have an on state and an off state,
   wherein in the on state the thyristor is configured to connect the first busbar to the reference terminal,
   wherein in the off state the thyristor is configured to disconnect the first busbar from the reference terminal,
   wherein the diode is configured to have an on state and an off state,
   wherein in an on stage the diode is configured to connect the reference terminal to the first busbar, and
   wherein in the off sate the diode is configured to disconnect the first busbar to the reference terminal.
Clause 31: The protection device according to clause 1,
   wherein the first switch comprises a transistor, a first diode and a second diode,
   wherein the transistor is connected in series with a first diode,
   wherein the second diode is connected in parallel with a series connected transistor and the first diode,
   wherein the series connected transistor and the first diode are configured to have an on state and an off state,
   wherein in the on state the series connected transistor and the first diode are configured to connect the first busbar to the reference terminal,
   wherein in the off state the series connected transistor and the first diode are configured to disconnect the first busbar from the reference terminal, and
   wherein in the on state the second diode is configured connect the reference terminal to the first busbar, and
   wherein in the off sate the second diode is configured to disconnect the first busbar to the reference terminal.
Clause 32: A power system comprising:
   a power generation assembly configured to generate a voltage between a plurality of busbars, wherein a voltage generated by the power generation assembly is a first voltage;
   an inverter assembly, comprising first side terminals at a first side of the inverter assembly coupled to the plurality of busbars, wherein the inverter assembly is configured to generate an alternating current (AC) voltage between second side terminals of the inverter assembly, and wherein the AC voltage is at a second voltage higher than the first voltage; and
   a protection device comprising:
      a first sensor, coupled to a first busbar of the plurality of busbars configured to measure a first electrical characteristic of the first busbar;
      a first switch, connected between the first busbar and a reference terminal, configured to connect and disconnect the first busbar to and from the reference terminal; and
      a controller, coupled to the first sensor and to the first switch, configured to control the first switch to connect the first busbar to the reference terminal based on the measurement of the first electrical characteristic.
Clause 33: The power system according to clause 32, wherein the inverter assembly comprises at least one inverter, each of the at least one inverter comprises:
   at least one inverter switching circuit configured to switch the polarity of a voltage at the first side terminals; and
   at least one transformer.
Clause 34: The power system according to clause 33, wherein the inverter comprises a cascade of inverters modules for each phase at the second side of the inverter.
Clause 35: The power system according to any one of clauses 33-34, wherein the at least one transformer further provides isolation between the second side terminals and the first side terminals of the inverter.
Clause 36: The power system according to any one of clauses 33-35, wherein the first switch is located between the busbars the plurality of busbars coupled to the first side of the inverter.
Clause 37: The power system according to any one of clauses 33-36, wherein the controller is further coupled to a switchgear, the switchgear coupled to the second side terminals of the inverter and configured to connect and disconnect the inverter assembly from a power network, and wherein the controller is further configured to indicate to the switchgear to disconnect the inverter from the network based on the measurement of the first electrical characteristic indicating a change in the first electrical characteristic. Clause 38: The power system according to any one of clauses 33-37, wherein the plurality of busbars connects a power generation assembly to the inverter assembly, and wherein the power generation assembly is further configured to:
   generate electrical energy, or
   store electrical energy.
Clause 39: The power system according to clause 38, wherein the power generation assembly comprises at least one of:
   at least one photovoltaic module;
   at least one battery;
   at least one fuel cell;
   at least one wind turbine;
   at least one wave power generator; and
   at least one fuel engine powered generator.
Clause 40: The power system according to any one of clauses 38-39, wherein the power generation assembly comprises a power source assembly, the power source assembly comprises a plurality of power generators configured to generate electrical power. Clause 41: The power system according to clause 40, wherein each of the plurality of power generators is coupled to a respective power converter.
Clause 42: The power system according to any one of clauses 40-41, wherein the power source assembly comprises a second plurality of busbars, and wherein the first switch is located between the second plurality of busbars.
Clause 43: The power system according to any one of clauses 38-42, wherein the power generation assembly comprises an energy storage assembly, wherein the energy storage assembly comprise a plurality of energy storage devices, wherein each energy storage device is configured to store electrical power from a third plurality of busbars of the energy storage assembly.
Clause 44: The power system according to clause 43, wherein each of the plurality of energy storage devices comprises a respective energy management unit configured to direct electrical energy to or from the respective storage/supply devices.
Clause 45: The power system according to any one of clauses 43-44, wherein the energy storage assembly comprise an energy management unit configured to direct electrical energy to or from energy storage assembly.
Clause 46: The power system according to any one of clauses 43-45, wherein the first switch is located between the third plurality of busbars.
Clause 47: The power system according to clause 46, wherein the first voltage range is a Low Voltage (LV) range and the second voltage range is a Medium Voltage (MV) range. Clause 48: The power system according to clause 47, wherein the Low Voltage range is between 0 volts to 2000 volts and the Medium Voltage range is between 2000 volts and 35,000 volts.
Clause 49: The power systems according to any of the preceding clauses, further comprising a second sensor coupled to the first busbar and to the controller, wherein the second sensor configured to measure a second electrical characteristic of the first busbar, and
   wherein the controller is further configured to control the first switch to connect the first busbar to the reference terminal further based on the second measurement of the second electrical characteristic indicating a change in the second electrical characteristic.
Clause 50: The power system according to any of the preceding clauses further comprising:
   a third sensor, configured to measure a respective third electrical characteristic of a second busbar of the plurality of busbars, and to generate a measurement of the third electrical characteristic;
   a second switch, connected between the second busbar and the reference terminal, configured to connect and disconnect the second busbar to and from the reference terminal; and
   wherein the controller is further coupled to the third sensor and to the second switch, the controller further configured to control the second switch to connect the second busbar to the reference terminal based on the measurement of the third electrical characteristic indicating a change in the third electrical characteristic.
Clause 51: The power system according to clause 50, further comprising a fourth sensor coupled to the second busbar, wherein the fourth sensor is configured to measure a fourth electrical characteristic of the second busbar,
   wherein the controller is further configured to control the second switch to connect the second busbar to the reference terminal further based on the measurement of the fourth electrical characteristic indicating a change in the fourth electrical characteristic.
Clause 52: The power system according to any one of clauses 32-50, wherein the controller is further coupled to a main control unit, and wherein the main control unit is configured to indicate to the controller to turn-on the first switch or the second switch. Clause 53: The power system according to clause 50, wherein each of the first switch and the second switch is configured to connect and disconnect the respective first busbar and second busbar to the reference terminal within 10 microseconds.
Clause 54: The power system according to any one of clauses 50-53, wherein the reference terminal is one terminal of the first busbars and the second busbar.
Clause 55: The power system according to any one of clauses 32-54, wherein the reference terminal is a ground.
Clause 56: The power system according to clause 51, wherein each of the first electrical characteristic, the second electrical characteristic, the third electrical characteristic and the fourth electrical characteristic is at least one of:
   voltage;
   current; or
   power.
Clause 57: The power system according to any one of clauses 50-56, wherein the first switch and the second switch comprises a switching circuit, wherein the switching circuit is one of:
   a diode;
   a transistor;
   a thyristor connected in parallel with a diode; and
   a transistor connected in series with a first diode, and a second diode connected in parallel with the series connected transistor and first diode;
   a diac; and
   a triac.
Clause 58: The power system according to clause 57, wherein the first and the second switch further comprise a snubber circuit connected in parallel with the switching circuits, wherein the snubber circuit comprises a resistor connected in series with a capacitor.
Clause 59: The power system according to any one of clauses 57-58, comprise a choke connected in series with the switching circuits.
Clause 60: The power system according to clause 1, wherein the first switch comprises a thyristor and a diode,
   wherein the diode is connected in parallel with the thyristor,
   wherein the thyristor configured to have an on state and an off state,
   wherein in the on state the thyristor is configured to connect the first busbar to the reference terminal,
   wherein in the off state the thyristor is configured to disconnect the first busbar from the reference terminal,
   wherein the diode is configured to have an on state and an off state,
   wherein in an on stage the diode is configured to connect the reference terminal to the first busbar, and
   wherein in the off sate the diode is configured to disconnect the first busbar to the reference terminal.
Clause 61: The power system according to clause 1,
   wherein the first switch comprises a transistor, a first diode and a second diode,
   wherein the transistor is connected in series with a first diode,
   wherein the second diode is connected in parallel with a series connected transistor and the first diode,
   wherein the series connected transistor and the first diode are configured to have an on state and an off state,
   wherein in the on state the series connected transistor and the first diode are configured to connect the first busbar to the reference terminal,
   wherein in the off state the series connected transistor and the first diode are configured to disconnect the first busbar from the reference terminal, and
   wherein in the on state the second diode is configured connect the reference terminal to the first busbar, and
   wherein in the off sate the second diode is configured to disconnect the first busbar to the reference terminal.
Clause 62: The power system according to any one of clauses 32-61, further comprising a power supply a third switch and a fourth plurality of busbars, wherein the fourth plurality of busbars connect the power supply to the protection device, wherein the third switch is coupled to the controller, and wherein the third switch is connected between the fourth plurality of busbars, the controller further configured to control the second switch to connect the second busbar to the reference terminal based on the measurement of the first electrical characteristic indicating a change in the first electrical characteristic.
Clause 63: A power system comprising:
   a power generation assembly configured to generate a voltage between a plurality of busbars, wherein the voltage generated by the power generation assembly is a first voltage;
   an inverter assembly, comprising first side terminals at a first side of the inverter assembly coupled to the plurality of busbars, wherein the inverter assembly is configured to generate an alternating current (AC) voltage between second side terminals of the inverter assembly , and wherein the AC voltage is at a second voltage higher than the first voltage;
   a switchgear, coupled to the second side terminals of the inverter assembly, configured to connect and disconnect the inverter assembly from a power network; and
   a protection device comprising:
      a first sensor, coupled to a first busbar of the plurality of busbars configured to measure a first electrical characteristic of the first busbar;
      a controller, coupled to the first sensor configured to indicate to the switchgear to disconnect the inverter from the network based on the measurement of the first electrical characteristic.
Clause 64: The power system of clause 63, wherein the protection device comprises:
   a first switch, connected between the first busbar and a reference terminal, configured to connect and disconnect the first busbar to and from the reference terminal; and
   wherein the controller is further configured to indicate to the switchgear to disconnect the inverter from the network based on the measurement of the first electrical characteristic indicating a change in the first electrical characteristic.
Clause 65: A method comprising the steps of:
   measuring a first electrical characteristic relating to a busbar of a plurality of busbars, wherein the plurality of busbar are coupled to first side terminals of an inverter assembly;
   identifying a change in the measured first electrical characteristic; and
   connecting the busbar to a reference terminal based on the measured first electrical characteristic.
Clause 66: The method of clause 65, further comprising disconnecting the inverter assembly from a network based on the measured first electrical characteristic,
   wherein the inverter assembly is coupled to the network at a second side of the inverter assembly.
Clause 67: The method of any one of clauses 68-66, further comprising measuring a second electrical characteristic relating to the busbar.
Clause 68: The method of clause 67, further comprising connecting a second busbar of the plurality of busbars to the reference terminal, wherein the connecting is based on the measured first electrical characteristic.
Clause 69: The method of clause 68 further comprising connecting a second busbar of the plural, coupled to the first side of the inverter, to the reference terminal, wherein the connecting is based on the second electrical characteristic.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A protection device comprising:
a sensor, configured to be coupled to a first busbar of a plurality of busbars, and configured to measure an electrical characteristic of the first busbar;
a switch, coupled between the first busbar and a reference terminal, configured to connect and disconnect the first busbar, to and from the reference terminal; and
a controller, coupled to the sensor and to the switch, configured to control the switch to connect the first busbar to the reference terminal based on the measurement of the electrical characteristic.

2. The protection device according to claim 1, wherein the controller is configured to control the switch to connect the first busbar to the reference terminal based on the measurement of the electrical characteristic exceeding a threshold.

3. The protection device according to claims 1 or 2, wherein the plurality of busbars are configured to be coupled to first side terminals at a first side of an inverter assembly, the inverter assembly further comprising:
second side terminals at a second side of the inverter assembly;
at least one inverter switching circuit configured to generate a pulsed voltage; and
at least one transformer.

4. The protection device according to claim 3, wherein the at least one transformer further provides isolation between the second side terminals and the first side terminals of the inverter.

5. The protection device according to any of the preceding claims, wherein the switch is configured to be coupled between a first and a second busbar of the plurality of busbars.

6. The protection device according to any of the preceding claims, wherein the plurality of busbars connect a power generation assembly to the inverter assembly, and
wherein the power generation assembly is configured to:
generate electrical energy, or
store electrical energy.

7. The protection device according to claim 3, wherein a level of a first voltage between a first busbar and a second busbar at the first side of the inverter assembly is at a first voltage range,
wherein the inverter is configured to generate an alternating current (AC) voltage between the second side terminals of the inverter, and
wherein the level of the AC voltage is at a second voltage range higher than the first voltage range.

8. The protection device of claim 7, wherein the first voltage range is a Low Voltage (LV) and the second voltage range is a Medium Voltage (MV).

9. The protection device according to any of the preceding claims, wherein the controller is further configured to be coupled to a main control unit, and
wherein the main control unit is configured to indicate to the controller to turn-on the switch.

10. The protection device according to any of the preceding claims, wherein the switch is configured to connect and disconnect the respective first busbar to the reference terminal within 10 microseconds.

11. The protection device according to any of the preceding claims, wherein the electrical characteristic is at least one of:
voltage;
current; or
power.

12. The protection device according to any of the preceding claims, wherein the switch comprises a switching circuit comprising a thyristor and a diode,
wherein the diode is coupled in parallel with the thyristor,
wherein the thyristor configured to have an on state and an off state,
wherein in the on state the thyristor is configured to connect the first busbar to the reference terminal,
wherein in the off state the thyristor is configured to disconnect the first busbar from the reference terminal,
wherein the diode is configured to have an on state and an off state,
wherein in an on stage the diode is configured to connect the reference terminal to the first busbar,
wherein in the off sate the diode is configured to disconnect the first busbar to the reference terminal,
wherein the controller is configured to control the thyristor to transition from an off state to an on state based on the electrical characteristic exceeding a first threshold, and
wherein the diode is configured to transition from an off state to an on state based on the electrical characteristic exceeding a second threshold.

13. The protection device according to any of claims 1-11, wherein the switch comprises a switching circuit comprising a transistor, a first diode and a second diode,
wherein the transistor is coupled in series with a first diode,
wherein the second diode is coupled in parallel with a series connected transistor and the first diode,
wherein the series coupled transistor and the first diode are configured to have an on state and an off state,
wherein in the on state the series coupled transistor and the first diode are configured to connect the first busbar to the reference terminal,
wherein in the off state the series connected transistor and the first diode are configured to disconnect the first busbar from the reference terminal, and
wherein in the on state the second diode is configured connect the reference terminal to the first busbar
wherein in the off sate the second diode is configured to disconnect the first busbar to the reference terminal,
wherein the controller is configured to control the transistor to transition from an off state to an on state based on the electrical characteristic exceeding a first threshold, and
wherein the second diode is configured to transition from an off state to an on state based on the electrical characteristic exceeding a second threshold..

14. The protection device according to claim 12 or 13, wherein the switch further comprise a choke coupled in series with the switching circuit, and a snubber circuit coupled in parallel with a switching circuit of the switch, wherein the snubber circuit comprises a resistor coupled in series with a capacitor.

15. A method comprising the steps of:
measuring, by a sensor, an electrical characteristic relating to a busbar of a plurality of busbars coupled to first side terminals of an inverter assembly, wherein the inverter assembly is configured to generate an alternating current (AC) voltage between second side terminals of the inverter;
identifying by a controller a change in the measured electrical characteristic; and
connecting by a switch the busbar to a reference terminal based on the measured electrical characteristic
wherein a level of a first voltage between a first busbar and a second busbar of the plurality of busbars at the first side of the inverter assembly is at a Low Voltage (LV) range,
wherein the level of the AC voltage is at a Medium Voltage (MV) range higher than the low voltage range.
